# EUROPÄISCHE PATENTSCHRIFT

(11) **EP 0 321 397 B1**
(45) Veröffentlichungstag und Bekanntmachung des Hinweises auf die Patenterteilung: **03.11.1993**
(21) Anmeldenummer: 88810814.9
(22) Anmeldetag: 29.11.1988
(51) Int. Cl.: C09B 67/22, C09B 57/04, C09B 63/00

(54) **Neue Stoffzusammensetzungen auf der Basis von Tetrachlorisoindolinon-Pigmenten**
Stuff compositions based on tetrachloroisoindolinone pigments
Compositions à base de pigments de tétrachloroisoindolinones

(30) Priorität: 08.12.1987 US 130245
(43) Veröffentlichungstag der Anmeldung: 21.06.1989
(73) Patentinhaber: CIBA-GEIGY AG, 4002 Basel (CH)
(72) Erfinder: Jaffe, Edward, E., Dr., Wilmington Delaware 19810 (US); Von der Crone, Jost, Dr., Arconciel (CH); Medinger, Bernhard, Dr., Giffers (CH)

(56) Entgegenhaltungen:
- DE-A- 1 914 271
- DE-A- 2 518 892
- DE-A- 2 913 206
- DE-B- 1 025 080
- US-A- 4 692 189

## Beschreibung

Die Erfindung betrifft Stoffzusammensetzungen enthaltend ein Bis-(tetrachlorisoindolinon)-pigment und eine sulfonierte Isoindolinon-verbindung, sowie ihre Verwendung zum Färben von hochmolekularem organischem Material.

Die Tetrachlorisoindolinonpigmente, die schon lange zum Färben von hochmolekularem organischem Material eingesetzt werden (vgl. z.B. US-PS 3 076 815 und US-PS 3 758 497), erfüllen, insbesondere bezüglich ihres rheologischen Verhaltens, nicht immer die Erfordernisse der modernen Technik.

Es wurde nun gefunden, dass durch Zusatz von bestimmten sulfonierten - Indolinon-verbindungen zu Bis-(tetrachlorisoindolinon)-pigmenten das rheologische Verhalten der letzteren überraschend verbessert wird.

Die vorliegende Erfindung betrifft demnach eine Stoffzusammensetzung enthaltend
a) ein Isoindolinonpigment der Formel I 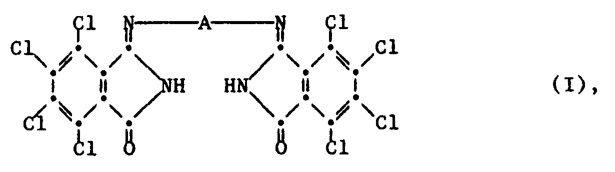 worin A eine Gruppen der Formeln 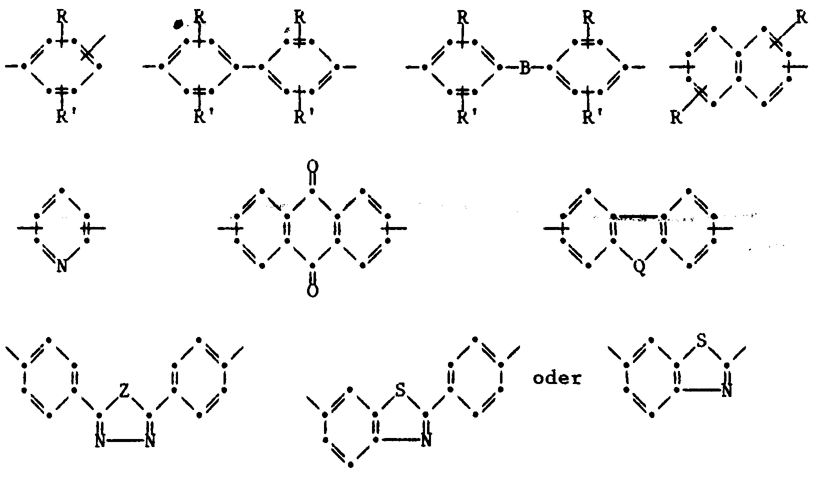 ist, worin B -O-, -S-, -SO₂-, -N=N-, -CH₂-, -CH=CH-, -O-CH₂-O-, 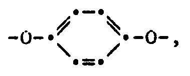 -CONH-, -NHCONH- oder -CONHNHCO-, Q -O- oder -NH- und Z -O- oder -S- bedeuten und R und R′ unabhängig voneinander Wasserstoff, Halogen, C₁-C₄-Alkyl, C₁-C₄-Alkoxy oder Phenoxy sind, und
b) eine Verbindung der Formel II 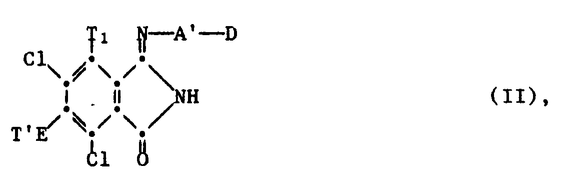 worin A′ die oben für A angegebene Bedeutung hat, D Wasserstoff, Amino oder eine Gruppe der Formel III 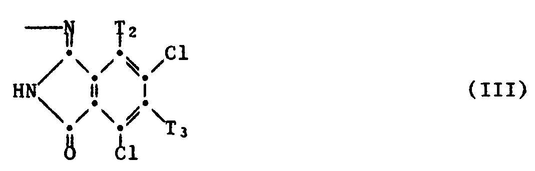 bedeutet, E -O- oder -S- ist, T₁, T₂ und T₃ unabhängig voneinander Chlor oder eine Gruppe -ET′ bedeuten, T′ eine der Gruppen der Formeln 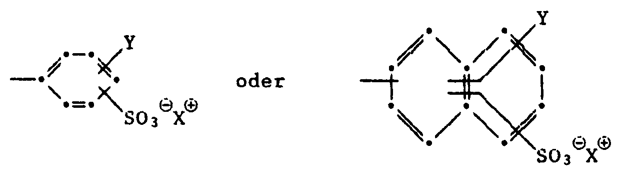 ist, X^{⊕} H^{⊕} oder eine Gruppe der Formeln 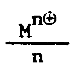 oder
   N^{⊕}(R₁)(R₂)(R₃)(R₄) darstellt, M^{n⊕} ein n-wertiges Metallkation, n die Zahlen 1, 2 oder 3, R₁, R₂, R₃, R₄ unabhängig voneinander Wasserstoff, C₁-C₁₈-Alkyl, C₅-C₆-Cycloalkyl, unsubstituiertes oder durch C₁-C₁₈-Alkyl substituiertes Phenyl bedeuten oder R₃ und R₄ zusammen mit dem N-Atom einen Pyrrolidin-, Imidazolidin-, Piperidin-, oder Morpholinrest, oder R₂, R₃ und R₄ zusammen mit dem N-Atom eine Pyrrol-, Pyridin-, Picolin-, Pyrazin-, Chinolin- oder Isochinolinrest bilden und Y Wasserstoff, Halogen, Methyl, Methoxy oder Amino bedeutet.

Bedeuten etwaige Substituenten Halogen, so handelt es sich dabei z.B. um Fluor, vorzugsweise Brom und insbesondere Chlor.

Bedeutet R oder R′ C₁-C₄-Alkyl, so meint man damit z.B. Methyl, Ethyl, n-Propyl, Isopropyl, n-Butyl, sec.-Butyl oder tert.-Butyl. Bevorzugt ist Methyl.

R und R′ stellen als C₁-C₄-Alkoxy z.B. Methoxy, Ethoxy, n-Propoxy, n-Butoxy, oder sec-Butoxy dar. Bevorzugt ist Methoxy.

A und A′ bedeuten vorzugsweise eine Phenylengruppe der Formel

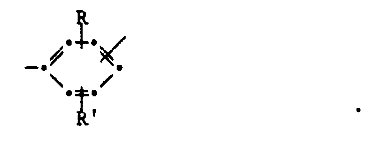

In dieser Bedeutung stellen A und A′ beispielsweise die unsubstituierte p-oder m-Phenylengruppe oder die 2-Chlor-1,4-phenylen-, 2-Methyl-1,4-phenylen-, 2-Ethyl-1,4-phenylen-, 2-n-Propyl-1,4-phenylen-, 2-Isopropyl-1,4-phenylen-, 2-tert.-Butyl-1,4-phenylen-, 2-Methoxy-1,4-phenylen-, 2-Ethoxy-1,4-phenylen-, 2-tert.-Butoxy-1,4-phenylen-, 2,5-Dichlor-1,4-phenylen-, 2,5-Dimethyl-1,4-phenylen-, 2,5-Diethyl-1,4-phenylen-, 2,5-Dimethoxy-1,4-phenylen-, 2,5-Diethoxy-1,4-phenylen-, 2-Chlor-5-methyl-1,4-phenylen-, 2-Chlor-5-methoxy-1,4-phenylen-, 2-Methyl-5-methoxy-1,4-phenylen-, 2,6-Dichlor-1,4-phenylen-, 2,6-Dimethyl-1,4-phenylen-, 2-Chlor-6-methoxy-1,4-phenylen-, 2-Chlor-1,3-phenylen-, 2-Methyl-1,3-phenylen-, 2-Methoxy-1,3-phenylen-, 2,5-Dichlor-1,3-phenylen-, 2,5-Dimethyl-1,3-phenylen- oder 2-Chlor-5-methyl-1,3-phenylengruppe, insbesondere jedoch eine mit Chloratomen, Methyl-, Methoxy- oder Ethoxygruppen in 2-Stellung monosubstituierte oder in 2,5-Stellung gleich oder verschieden mit Chloratomen, Methyl-, Methoxy- oder Ethoxygruppen disubstituierte 1,4-Phenylengruppe dar. Bevorzugt ist die unsubstituierte p-Phenylengruppe.

Bedeuten A oder A′ eine Gruppe der Formel 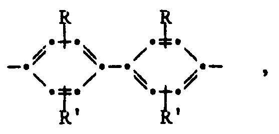
so handelt es sich beispielsweise um die unsubstituierte 4,4′-Biphenylylengruppe, oder die 3,3′-Dichlor-, 3,3′-Dimethyl-, 3,3′-Diethyl-, 3,3′-Diisopropyl-, 3,3′-Di-n-butyl-, 3,3′-Di-tert.-butyl-, 3,3′-Di-methoxy-, 3,3′-Diethoxy-, 3,3′-Di-tert.-butoxy-, 3,3′,5,5′-Tetrachlor-, 3,3′,5,5′-Tetramethyl-, 3,3′,5,5′-Tetramethoxy-, 3,3′-Dichlor-5,5′-dimethyl-, 3,3′-Dichlor-5,5′-dimethoxy-, 3,3′-Dimethyl-5,5′-methoxy-4,4′-biphenylengruppe, insbesondere jedoch um eine mit Chloratomen, Methyl-, Methoxy- oder Ethoxygruppen in 3,3′-Stellung gleich disubstituierte 4,4′-Biphenylylengruppe.

Stellen A oder A′ eine Gruppe der Formel 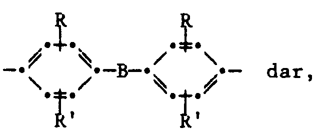
so handelt es sich beispielsweise um gegebenenfalls entsprechend den obengenannten Biphenylylenderivaten substituierte, vorzugsweise jedoch um unsubstituierte p,p′-Diphenylylenether-, p,p′-Diphenylylen-sulfid-, p,p′-Diphenylylen-sulfon-, p,p′-Diphenylylen-azo-, Diphenylylen-methan-, p,p′-Diphenylylen-ethen-, p,p′-Diphenylylen-dioxy-methan-, p,p′-Diphenylylen-dioxy-benzol-, p,p′-Diphenylylen-carbamid-, p,p′-Diphenylylen-harnstoff- oder p,p′-Diphenylylen-dicarbamyl-hydrazingruppen.

Weiter bedeuten A und A′ z.B. gegebenenfalls entsprechend den obengenannten Biphenylylenderivaten substituiertes, vorzugsweise jedoch unsubstituiertes 1,4-, 1,5- oder 2,6-Naphthylen, 1,5-Anthrachinodiyl, 1,4-Anthrachinondiyl, 2,6-Pyridindiyl, 2,7-Carbazoldiyl, 2,8-Dibenzofurandiyl, 3,8-Dibenzofurandiyl, 3,7-Dibenzofurandiyl, 6,4′-(2-Phenyl)-benzthiazolidyl, 2,6-Benzthiazoldiyl, 4', 4''-(2,5-Bisphenyl)-oxadiazoldiyl oder 4',4''-(2,5-Bisphenyl)-thiadiazoldiyl.

-ET′ stellt z.B. eine der folgenden Gruppen dar

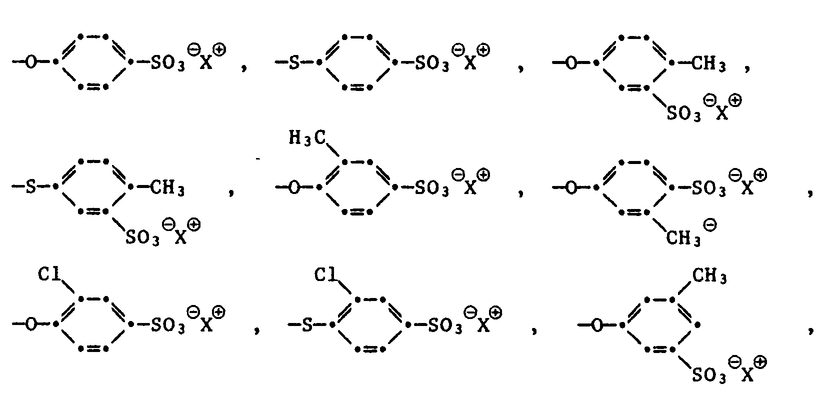

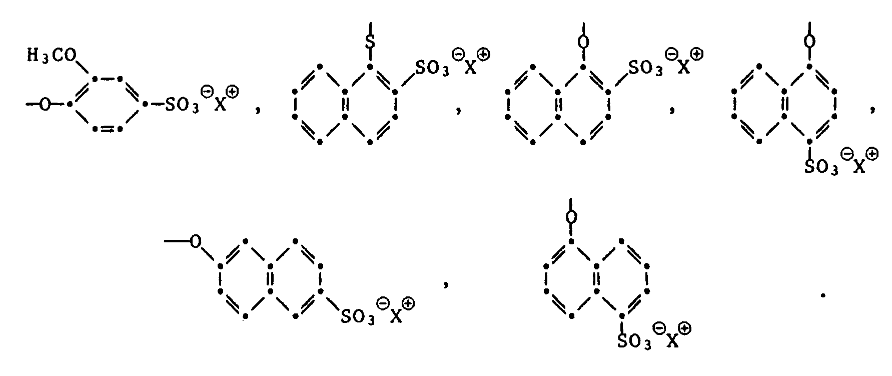

X^{⊕} ist vorzugsweise H^{⊕} oder insbesondere eine Gruppe der Formel

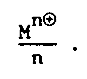

Stellt X^{⊕} eine Gruppe der Formel 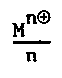
dar, so handelt es sich bei M^{n⊕} beispielsweise um ein Alkali-, Erdalkali-, Aluminium- oder Uebergangsmetallkation, wie z.B. Na^{⊕}, K^{⊕}, Mg²^{⊕}, Ca²^{⊕}, Sr²^{⊕}, Ba²^{⊕}, Mn²^{⊕}, Cu²^{⊕}, Ni²^{⊕}, Cd²^{⊕}, Co³^{⊕}, Al³^{⊕} und Cr³^{⊕}, insbesondere aber um ein Alkali- oder Erdalkalikation (n = 1 oder 2) und bevorzugt um Ca²^{⊕}.

Bedeuten etwaige Substituenten C₁-C₁₈-Alkyl, so handelt es sich dabei z.B. um Methyl, Ethyl, n-Propyl, Isopropyl, n-Butyl, sec.-Butyl, tert.-Butyl, n-Pentyl, tert.-Pentyl, Hexyl, Heptyl, Octyl, Decyl, Dodecyl, Tetradecyl, Hexadecyl, Heptadecyl oder Octadecyl.

Bedeuten R₁, R₂, R₃ und R₄ C₅-C₆-Cylcoalkyl, dann handelt, es sich z.B. um Cyclopentyl oder insbesondere um Cyclohexyl.

Als durch C₁-C₁₈-Alkyl substituiertes Phenyl, bedeuten R₁, R₂, R₃ und R₄ vorzugsweise durch C₁₂-C₁₈-Alkyl substituiertes Phenyl.

Als Beispiele für N^{⊕}(R₁)(R₂)(R₃)(R₄) seien genannt: N^{⊕}H₄, N^{⊕}H₃CH₃, N^{⊕}H₂(CH₃)₂, N^{⊕}H₃C₂H₅, N^{⊕}H₂(C₂H₅)₂, N^{⊕}H₃C₃H₇-iso, N^{⊕}H₃-Cyclohexyl, N^{⊕}H₂-(Cyclohexyl)₂, N^{⊕}H₂(CH₃)(C₆H₅), N^{⊕}H₃C₆H₅, N^{⊕}H₃-p-Octadecylphenyl und N^{⊕}(CH₃)₄.

D ist bevorzugt eine Gruppe der Formel III.
E bedeutet vorzugsweise -O-.
T₁ und T₂ sind bevorzugt Chlor und T₃ eine Gruppe -ET′. T′ bedeutet vorzugsweise eine Gruppe der Formel 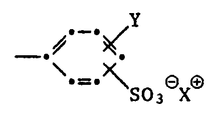
und Y Wasserstoff.

Die Tetrachlorisoindolinonpigmente der Formel I sind bekannt und können nach bekannten Methoden hergestellt werden.

Die Verbundungen der Formel II sind neu und stellen einen weiteren Gegenstand der Erfindung dar. Man erhält sie in Analogie zu an sich bekannten Verfahren, z.B. durch Umsetzung von 3,4,5,6-Tetrachlor-2-cyan-benzoesäure-niederalkylester, bevorzugt -methylester, mit einem Alkalisalz einer Verbindung der Formeln 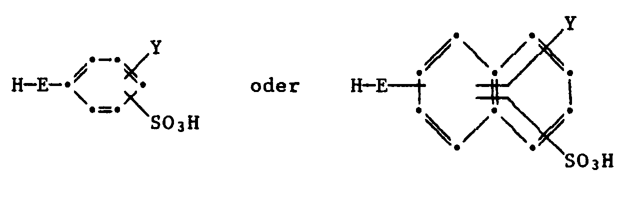
(welche bekannte Verbindungen darstellen und/oder nach allgemein bekannten Methoden hergestellt werden können) in einem hydrophilen organischen Lösungsmittel, wie z.B. ein Amid, wie Dimethylformamid, Dimethylacetamid, N-Methylpyrrolidon, ein Keton, wie Aceton oder Methylethylketon oder ein Sulfoxid, wie Dimethylsulfoxid (vgl. z.B. US-Patent 3 884 955), und anschliessende Kondensation des so erhaltenen Produktes mit einem Amin der Formel

H₂N-A′-D ,

worin A′ und D die oben angegebene Bedeutung haben, im Molverhältnis 1:1 oder 2:1, unter Ausschluss von Wasser, in einem polaren organischen Lösungsmittel, vorzugsweise Methanol, Ethanol oder Isopropanol, und in Gegenwart einer Base, wie z.B. Natriummethylat oder Natriumethylat, und gegebenenfalls durch anschliessende Umsetzung mit einem Salz X^{⊕}L^{⊖}, worin X^{⊕} eine der Gruppen 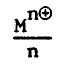
oder N^{⊕}(R₁)(R₂)(R₃)(R₄) mit der oben angegebenen Bedeutung ist und L^{⊖} z.B. ein Hydroxy-, Chlorid-, Acetat- oder Nitrat-Ion bedeutet.

Zur Herstellung der erfindungsgemässen Stoffzusammensetzung wird zweckmässig die Komponente a) zuerst nach üblichen Methoden konditioniert und in Wasser suspendiert. Die Komponente b) wird im allgemeinen als freie Sulfosäure zugefügt und das Salz X^{⊕}L^{⊖} zur Fällung zugesetzt. Es ist auch möglich die Komponente b) direkt in Salzform in wässriger Suspension mit der Komponente a) zu mischen.

Die Mengenverhältnisse der Komponenten der erfindungsgemässen Stoffzusammensetzungen können beliebig variieren. Bevorzugte Mengenverhältnisse betragen jedoch 1 bis 10 Gew.% der Komponente b) zu 99 bis 90 Gew.% der Komponente a), insbesondere aber 2 bis 8 Gew.% der Komponente b) zu 98 bis 92 Gew.% der Komponente a) und bevorzugt 4 bis 6 Gew.% der Komponente b) zu 96 bis 94 Gew.% der Komponente a).

Die Zugabe der Komponente b) erfolgt wie bereits erwähnt vorzugsweise nach der Konditionierung der Komponente a). Unter Konditionierung versteht man die Herstellung einer feinen Partikelform, beispielsweise durch alkalische Umfällung, Trockenmahlung mit oder ohne Salz, Lösungsmittel- oder wässrige Mahlung oder Salzknetung.

Je nach Konditionierverfahren oder Applikationszweck kann es von Vorteil sein, dem Pigment neben dem erfindungsgemässen Zusatz der Komponente b) gewisse Mengen an texturverbessernden Mitteln vor oder nach dem Konditionierprozess zuzufügen. Als solche kommen insbesondere Fettsäuren mit mindestens 18 C-Atomen, beispielsweise Stearin-oder Behensäure oder deren Amide oder Metallsalze, insbesondere Mg-Salze, sowie Weichmacher, Wachse, Harzsäuren, wie Abietinsäure, Kolophoniumseife, Alkylphenole oder aliphatische Alkohole, wie Stearylalkohol oder vicinale Diole, wie Dodecandiol-1,2, ferner modifizierte Kolophoniummaleinatharze oder Fumarsäurekolophoniumharze, in Betracht. Die texturverbessernden Mittel werden vorzugsweise in Mengen von 0,1-30 Gew.% insbesondere 2-15 Gew.%, bezogen auf das Endprodukt, zugesetzt.

Die erfindungsgemässen Stoffkompositionen eignen sich als Pigmente zum Färben von hochmolekularem organischem Material.

Hochmolekulare organische Materialien, die mit den erfindungsgemässen Stoffzusammensetzungen gefärbt bzw. pigmentiert werden können, sind z.B. Celluloseether und -ester, wie Ethylcellulose, Nitrocellulose, Celluloseacetat oder Cellulosebutyrat, natürliche Harze oder Kunstharze, wie Polymerisationsharze oder Kondensationsharze, wie Aminoplaste, insbesondere Harnstoff- und Melamin-Formaldehydharze, Alkydharze, Phenoplaste, Polycarbonate, Polyolefine, Polystyrol, Polyvinylchlorid, Polyamide, Polyurethane, Polyester, Gummi, Casein, Silikon und Silikonharze, einzeln oder in Mischungen.

Hochmolekulare organische Materialien in gelöster Form als Filmbildner kommen auch in Frage, wie z.B. Leinölfirnis, Nitrocellulose, Alkydharze, Phenolharze, Melaminharze, Acrylharze und Harnstoff-Formaldehydharze.

Die erwähnten hochmolekularen organischen Verbindungen können einzeln oder in Gemischen als plastische Massen, Schmelzen oder in Form von Spinnlösungen, Lacken, Anstrichstoffen oder Druckfarben vorliegen. Je nach Verwendungszweck erweist es sich als vorteilhaft, die erfindungsgemässen Stoffzusammensetzungen als Toner oder in Form von Präparaten einzusetzen. Bezogen auf das zu pigmentierende hochmolekulare organische Material kann man die erfindungsgemässen Stoffzusammensetzungen in einer Menge von 0,01 bis 30 Gew.%, vorzugsweise von 0,1 bis 10 Gew.%, einsetzen.

Die Pigmentierung der hochmolekularen organischen Substanzen mit den erfindungsgemässen Stoffzusammensetzungen erfolgt beispielsweise derart, dass man eine solche Stoffzusammensetzung gegebenenfalls in Form von Masterbatches diesen Substraten unter Verwendung von Walzwerken, Misch-oder Mahlapparaten zumischt. Das pigmentierte Material wird hierauf nach an sich bekannten Verfahren, wie Kalandrieren, Pressen, Strangpressen, Streichen, Giessen oder Spritzguss, in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure ode Sebacinsäure dienen. Die Weichmacher können vor oder nach der Einverleibung der erfindungsgemässen Stoffzusammensetzungen in die Polymeren eingearbeitet werden. Es ist ferner möglich, zwecks Erzielung verschiedener Farbtöne den hochmolekularen, organischen Stoffen neben den erfindungsgemässen Stoffzusammensetzungen noch Füllstoffe bzw. andere farbgebende Bestandteile, wie Weiss-, Bunt- oder Schwarzpigmente, in beliebigen Mengen zuzufügen.

Zum Pigmentieren von Lacken und Druckfarben werden die hochmolekularen organischen Materialien und die erfindungsgemässen Stoffzusammensetzungen gegebenenfalls zusammen mit Zusatzstoffen, wie Füllmitteln, anderen Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die erhaltenen Färbungen, beispielsweise in Kunststoffen, Fasern, Lacken oder Drucken, zeichnen sich durch gute allgemeine Eigenschaften, wie gute Dispergierbarkeit, hohe Transparenz, gute Ueberlackier-, Migrations-, Hitze-, Licht- und Wetterbeständikeit, sowie Verzugsfreiheit in Kunststoffen, aus.

Ausserdem weisen die erfindungsgemässen Stoffzusammensetzungen im Vergleich zu unmodifzierten Tetrachlorisoindolinonpigmenten insbesondere in Lacken und Druckfarben eine verbesserte Rheologie, geringere Trenneffekte, wie Ausschwimmen bei der Mitverwendung von Weisspigmenten und geringere Flokkulationstendenz, auf.

Infolge der guten rheologischen Eigenschaften der erfindungsgemässen Pigmentmischungen ist es möglich, Lacke hoher Pigmentkonzentration (high loadings) herzustellen.

Die erfindungsgemässen Stoffzusammensetzungen eigenen sich vorzugsweise zum Färben von wässrigen und/oder lösungsmittelhaltigen Lacken, insbesondere Automobillacken. Ganz besonders bevorzugt ist ihre Verwendung für Metalleffektlackierungen.

Die nachfolgenden Beispiele dienen zur Erläuterung der Erfindung.

Beispiel 1: Zu einer Lösung von 11,8 g Natriumsalz der Phenol-4-sulfonsäure und 17,1 g Tetrachlor-o-cyanbenzoesäuremethylester in 150 ml Dimethylsulfoxyd werden während einer Stunde 8,1 g wässrige 30 %-ige Natronlauge zugetropft. Anschliessend erwärmt man noch eine Stunde auf 60°C und giesst das Reaktionsgemisch in 500 ml Wasser ein. Man filtriert den unlöslichen Anteil ab und versetzt das Filtrat mit 200 g Kochsalz. Der gebildete Niederschlag wird abfiltriert, mit 10 %iger Kochsalzlösung gewaschen und getrocknet. Man erhält 15,2 g des Natriumsalzes einer Sulfonsäure, der aufgrund der Elementaranalyse folgende Formel zugeordnet wird: 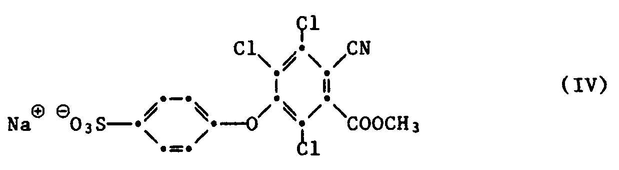
Das Produkt enthält noch 20 % - 30 % Kochsalz.

Man trägt 12 g des Produktes der Formel IV in eine Lösung von 1,35 g Natriummethylat in 80 ml Methanol ein, rührt 30 Minuten und gibt anschliessend 1,35 g p-Phenylendiamin zu. Es bildet sich eine gelbbraune Suspension, die während 15 Stunden gerührt wird. Nun erhitzt man zum Rückfluss, hält diese Temperatur 2 Stunden und säuert mit 5 ml Eisessig an. Der braune Niederschlag wird heiss abfiltriert, mit Methanol gewaschen und getrocknet. Man erhält 6,8 g Rohprodukt, das als Natriumsalz vorliegt.

Das entsprechende Calciumsalz wird wie folgt erhalten: 2 g des wie oben beschrieben erhaltenen Natriumsalzes werden in 150 ml Wasser auf 70-80°C erwärmt und mit einer wässrigen Lösung von 3 g Calciumchlorid versetzt. Der Niederschlag wird abfiltriert, mit wenig Wasser gewaschen und getrocknet. Man erhält 1 g des Farbstoffes der Formel V

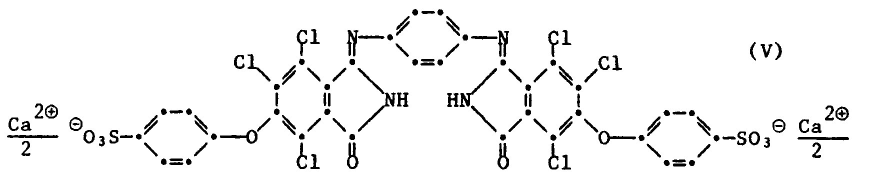

| Analyse für C₃₄H₁₄Cl₆N₄O₁₀S₂Ca | | | | |
|---|---|---|---|---|
| | C | H | S | Ca |
| Berechnet: | 42,74 % | 1,48 % | 6,71 % | 4,2 % |
| Gefunden: | 42,9 % | 2,2 % | 4,9 % | 4,31 % |

Beispiel 2: 2,4 g des Produktes der Formel IV aus Beispiel 1 werden in einer Lösung von 0,6 g Natriummethylat in 50 ml Methanol während 15 Minuten gerührt. Nun gibt man 1,88 g der Verbindung der Formel 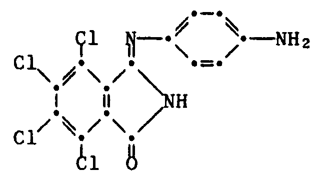
zu. Man rührt 15 Stunden bei Raumtemperatur, aschliessend 2 Stunden bei Rückflusstemperatur und säuert dan mit 5 ml Eisessig an. Das unlösliche Reaktionsprodukt wird heiss abfiltriert, mit Methanol gewaschen und getrocknet. Man erhält 2,5 g des Pigmentes der Formel VI:

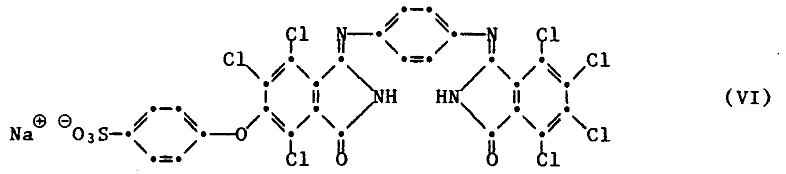

| Analyse für C₂₈H₁₀Cl₇N₄O₆SNa | | | | |
|---|---|---|---|---|
| | C | H | S | Cl |
| Berechnet: | 41.95 % | 1.26 % | 4.00 % | 30.96 % |
| Gefunden: | 41.72 % | 2.01 % | 2.30 % | 33.46 % |

Beispiel 3: 12 g des Produktes der Formel IV aus Beispiel 1 werden mit 1,35 g Natriummethylat in 80 ml Methanol umgesetzt und mit 2,7 g p-Phenylendiamin unter den Bedingungen von Beispiel 1 kondensiert. Man erhält ein braunes Produkt, dem aufgrund der Elementaranalyse die Formel VII zugeordnet wird:

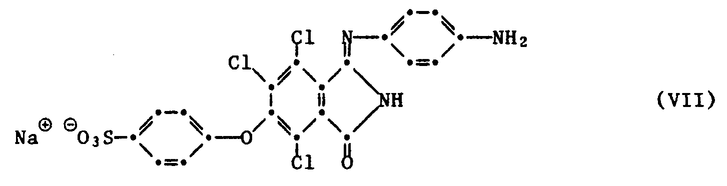

Beispiel 4: 10,9 g Natriumsalz der Phenol-4-sulfosäure und 13,5 g Tetrachlor-o-cyanbenzoesäuremethylester werden in 50 ml Dimethylformamid suspendiert und auf 55-60°C erhitzt. Die Reaktion wird im Dünnschichtchromatogramm verfolgt. Nach 2 Stunden ist nur noch wenig Tetrachlor-o-cyanbenzoesäuremethylester feststellbar. Das Reaktionsgemisch wird nun vollständig eingedampft. Man erhält 22,45 g eines festen Produktes, das als Hauptkomponente die Verbindung der Formel IV enthält. Wird dieses Produkt wie in Beispiel 1 beschrieben weiterverarbeitet, so erhält man den Farbstoff der Formel V mit den gleichen Eigenschaften, wie diejenigen des Beispiels 1.

Beispiel 5:
a) 15 g Bis-[4,5,6,7-tetrachlorisoindolin-3-on-1-yliden]-phenylen-diamin(1,4) werden in 150 ml Dimethylformamid bei Zimmertemperatur angeschlämmt. In die gelbe Suspension lässt man unter Rühren 50 ml einer 1N methanolischen Natriummethylatlösung einfliessen, wobei sich eine klare gelbe Lösung des Natriumsalzes des eingesetzten Isoindolins bildet. Nach einstündigem Rühren bei Raumtemperatur wird die Lösung mit 500 ml Wasser versetzt, der ausgefallene Niederschlag abfiltriert und das Nutschgut mit Wasser neutral gewaschen.
b) 27,8 g des so erhaltenen feuchten Nutschgutes (36 % Trockengehalt) werden in 150 ml Wasser suspendiert. Dann werden 0,5 g der Verbindung VI von Beispiel 2 und nach einer halben Stunde Rühren bei 70-75°C 3,6 g Calciumchlorid hinzugefügt. Nach einer weiteren halben Stunde wird die Pigmentmischung bei 70°C filtriert und getrocknet. Man erhält 10,55 g gelbes Mischpigment, welches, in ein Alkyl-Lacksystem eingearbeitet, im Vergleich zum unmodifizierten trockenen Pigment von Beispiel 5a) ein verbessertes Fliessverhalten zeigt.

Beispiel 6: Eine ähnliche Verbesserung des Fliessverhaltens in Lacken wird erreicht, wenn in Beispiel 5 anstelle der Verbindung VI aus Beispiel 2 0,5 g der Verbindung VII aus Beispiel 3 verwendet wird.

Beispiel 7: 27,8 g wasserfeuchtes Bis-[4,5,6,7-tetrachlorisoindolin-3-on-1-yliden]-phenylendiamin(1,4) (36 % Trockengehalt), welches wie in Beispiel 5a) beschrieben erhalten wird, wird mit 150 ml Wasser unter gutem Rühren auf 70°C erwärmt. Nun gibt man 0,5 g der Verbindung V aus Beispiel 1 hinzu, lässt auf Raumtemperatur erkalten und filtriert die Pigmentmischung ab. Man erhält nach dem Trocknen 10,5 g gelbes Mischpigment, welches, in ein Alkyd-Lacksystem eingearbeitet, im Vergleich zum unmodifizierten trockenen Pigment von Beispiel 5a) ein verbessertes Fliessverhalten zeigt.

Beispiel 8:
a) 15 g Bis-[4,5,6,7-tetrachlorisoindolin-3-on-1-yliden]-1-methylphenylendiamin(2,6) werden in 100 ml Isopropanol suspendiert und mit 50 ml einer 1n methanolischen Natriummethylatlösung versetzt. Nach 10 Minuten Rühren giesst man die Pigmentsuspension in eine Lösung von 15 ml Essigsäure in 500 ml Wasser. Das Produkt wird abgenutscht und mit Wasser gewaschen. Das erhaltene Pigment liegt in einer sehr feinverteilten Form vor.
b) 40,2 g des so erhaltenen feuchten Nutschgutes (25% Trockengehalt werden in 150 ml Wasser suspendiert. Dann werden 0,5 g der Verbindung der Formel V von Beispiel 1 und nach einer halben stunde Rühren bei 70-75°C 3,6 g Calciumchlorid hinzugefügt. Nach einer weiteren halben Stunde wird die Pigmentmischung bei 70°C filtriert und getrocknet. Man erhält 9,75 g gelbes Mischpigment, welches, in ein Alkyd-Lacksystem eingeareitet, im Vergleich zum unmodifizierten trockenen Pigment von Beispiel 8a) ein verbessertes Fliessverhalten zeigt.

## Patentansprüche

1. Stoffzusammensetzung enthaltend
a) ein Isoindolinonpigment der Formel I 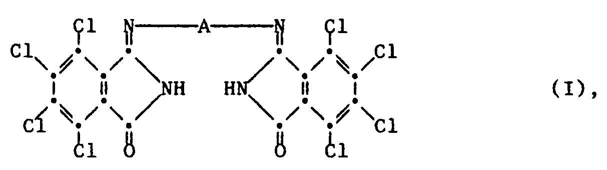 worin A eine der Gruppen der Formeln 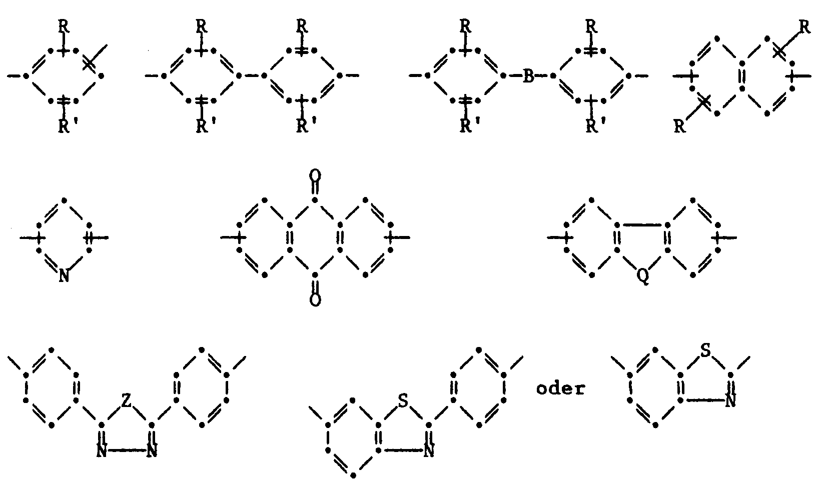 ist, worin B -O-, -S-, -SO₂-, -N=N-, -CH₂-, -CH=CH-, -O-CH₂-O-, 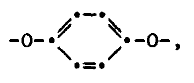 -CONH-, -NHCONH- oder -CONHNHCO-, Q -O- oder -NH- und Z -O- oder -S- bedeuten und R und R′ unabhängig voneinander Wasserstoff, Halogen, C₁-C₄-Alkyl, C₁-C₄-Alkoxy oder Phenoxy sind, und
b) eine Verbindung der Formel II 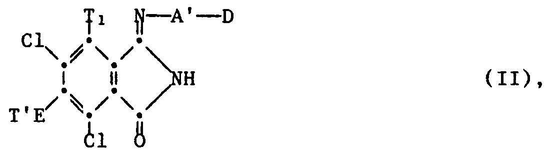 worin A′ die oben für A angegebene Bedeutung hat, D Wasserstoff, Amino oder eine Gruppe der Formel III 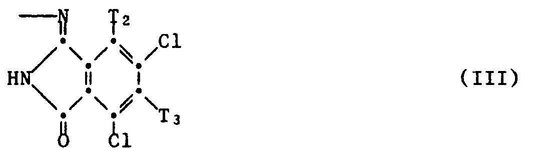 bedeutet, E -O- oder -S- ist, T₁, T₂ und T₃ unabhängig voneinander Chlor oder eine Gruppe -ET′bedeuten, T′ eine der Gruppen der Formeln 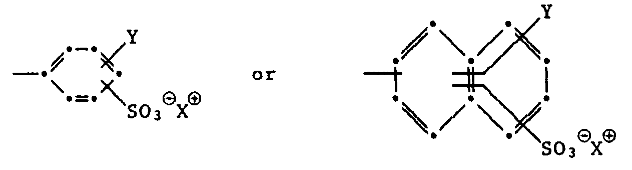 ist, X^{⊕} H^{⊕} oder eine Gruppe der Formeln 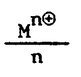 oder
N^{⊕}(R₁)(R₂)(R₃)(R₄) darstellt, M^{n⊕} ein n-wertiges Metallkation, n die Zahlen 1, 2 oder 3, R₁, R₂, R₃, R₄ unabhängig voneinander Wasserstoff, C₁-C₁₈-Alkyl, C₅-C₆-Cycloalkyl, unsubstituiertes oder durch C₁-C₁₈-Alkyl substituiertes Phenyl bedeuten oder R₃ und R₄ zusammen mit dem N-Atom einen Pyrrolidin-, Imidazolidin-, Piperidin-, Piperazin- oder Morpholinrest, oder R₂, R₃ und R₄ zusammen mit dem N-Atom einen Pyrrol-, Pyridin-, Picolin-, Pyrazin-, Chinolin- oder Isochinolinrest bilden und Y Wasserstoff, Halogen, Methyl, Methoxy oder Amino bedeutet.

2. Stoffzusammensetzung gemäss Anspruch 1, dadurch gekennzeichnet, dass sie als Komponente a) eine Verbindung der Formel I enthält, worin A eine Gruppe der Formel 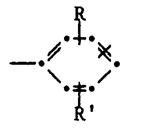 bedeutet, worin R und R′ unabhängig voneinander Wasserstoff, Chlor, Methyl, Methoxy oder Ethoxy sind.

3. Stoffzusammensetzung gemäss Anspruch 1, dadurch gekennzeichnet, dass sie als Komponente a) eine Verbindung der Formel I enthält, worin A unsubstituiertes p-Phenylen bedeutet.

4. Stoffzusammensetzung gemäss Anspruch 1, dadurch gekennzeichnet, dass sie als Komponente b) eine Verbindung der Formel II enthält, worin X^{⊕} eine Gruppe der Formel 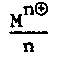 bedeutet, worin M^{n⊕} und n die in Anspruch 1 angegebene Bedeutung haben.

5. Stoffzusammensetzung gemäss Anspruch 1, dadurch gekennzeichnet, dass sie als Komponente b) eine Verbindung der Formel II enthält, worin X^{⊕} eine Gruppe der Formel 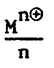 bedeutet, worin M^{n⊕} ein Alkali- oder Erdalkalikation und n die Zahlen 1 oder 2 bedeuten.

6. Stoffzusammensetzung gemäss Anspruch 5, dadurch gekennzeichnet, dass M^{n⊕} ein Calciumkation bedeutet.

7. Stoffzusammensetzung gemäss Anspruch 1, dadurch gekennzeichnet, dass sie als Komponente b) eine Verbindung der Formel II enthält, worin A′ eine Gruppe der Formel 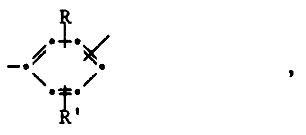 ist, worin R und R′ unabhängig voneinander Wasserstoff, Chlor, Methyl, Methoxy oder Ethoxy bedeuten.

8. Stoffzusammensetzung gemäss Anspruch 1, dadurch gekennzeichnet, dass sie als Komponente b) eine Verbindung der Formel II enthält, worin A′ unsubstituiertes p-Phenylen bedeutet.

9. Stoffzusammensetzung gemäss Anspruch 1, dadurch gekennzeichnet, dass sie als Komponente b) eine Verbindung der Formel II enthält, worin D eine Gruppe der Formel III 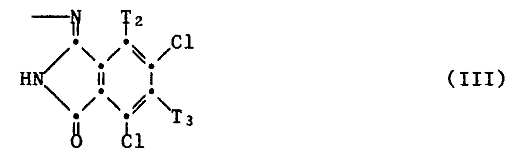 bedeutet.

10. Stoffzusammensetzung gemäss Anspruch 1, dadurch gekennzeichnet, dass sie als Komponente b) eine Verbindung der Formel II enthält, worin E - O-bedeutet.

11. Stoffzusammensetzung gemäss Anspruch 1, dadurch gekennzeichnet, dass sie als Komponente b) eine Verbindung der Formel II enthält, worin D eine Gruppe der Formel III, T₁ und T₂ Chlor und T₃ eine Gruppe -ET′ bedeuten.

12. Stoffzusammensetzung gemäss Anspruch 1, dadurch gekennzeichnet, dass sie als Komponente b) eine Verbindung der Formel II enthält, worin T′ eine Gruppe der Formel 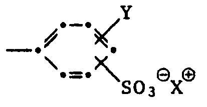 ist.

13. Stoffzusammensetzung gemäss Anspruch 1, dadurch gekennzeichnet, dass sie als Komponente b) eine Verbindung der Formel II enthält, worin Y Wasserstoff ist.

14. Stoffzusammensetzung gemäss Anspruch 1, enthaltend
a) ein Isoindolinonpigment der Formel 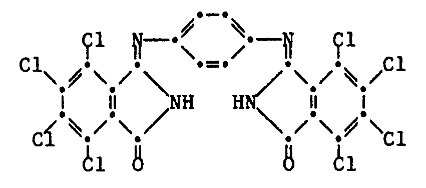 und
b) eine Verbindung der Formel

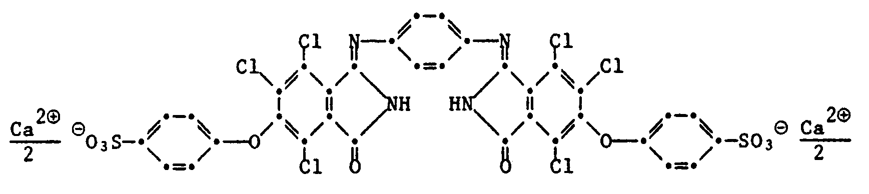

15. Stoffzusammensetzung gemäss Anspruch 1, dadurch gekennzeichnet, dass das Mengenverhältnis der Komponente a) zur Komponente b) 99 bis 90 Gew.% zu 1 bis 10 Gew.% beträgt.

16. Hochmolekulares organisches Material enthaltend eine Stoffzusammensetzung gemäss Anspruch 1.

17. Verbindung der Formel II 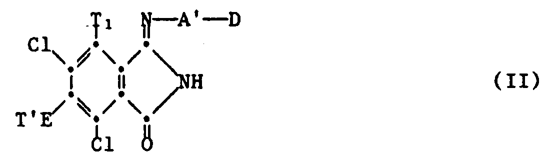 worin A′ eine der Gruppen der Formeln, 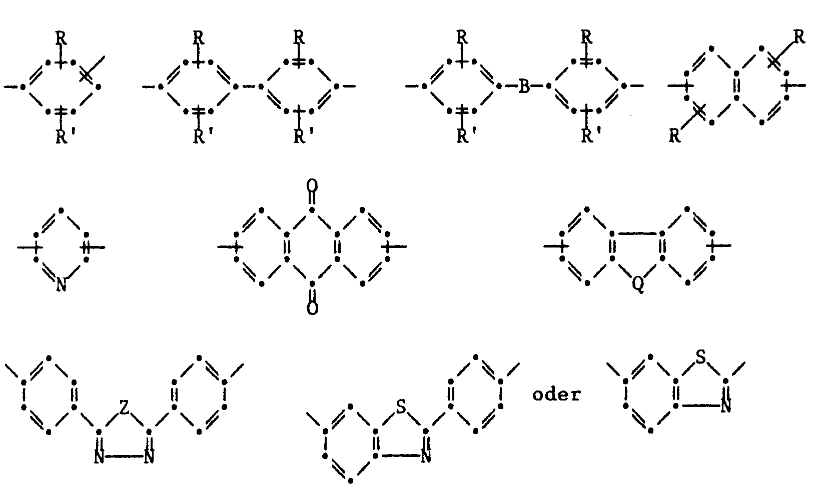 ist, worin B -O-, -S-, -SO₂-, -N=N-, -CH₂-, -CH=CH-, -O-Ch₂-O-, 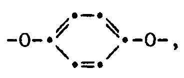 -CONH-, -NHCONH- oder -CONHNHCO-, Q -O- oder -NH- und Z -O- oder -S- bedeutet und R und R′ unabhängig voneinander Wasserstoff, Halogen, C₁-C₄-Alkyl, C₁-C₄-Alkoxy oder Phenoxy sind,
D Wasserstoff, Amino oder eine Gruppe der Formel III 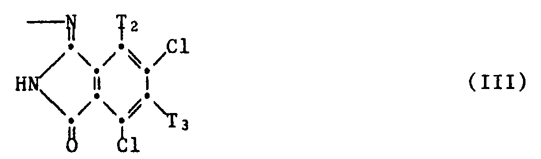 bedeutet, E -O- oder -S- ist, T₁, T₂ und T₃ unabhängig voneinander Chlor oder eine Gruppe -ET′bedeuten T′ eine der Gruppen der Formeln 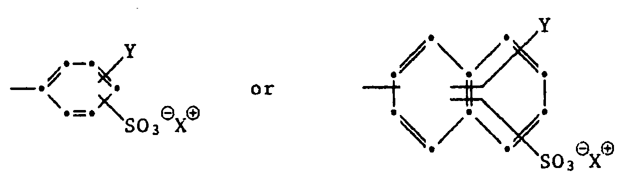 ist, H^{⊕} H^{⊕} oder eine Gruppe der Formeln 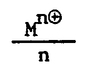 oder
N^{⊕}(R₁)(R₂)(R₃)(R₄)darstellt, M^{n⊕} ein n-wertiges Metallkation, n die Zahlen 1, 2 oder 3, R₁, R₂, R₃, R₄, unabhängig voneinander Wasserstoff, C₁-C₁₈-Alkyl, C₅-C₆-Cycloalkyl, unsubstituiertes oder durch C₁-C₁₈-Alkyl substituiertes Phenyl bedeuten oder R₃ und R₄ zusammen mit dem N-Atom einen Pyrrolidon-, Imidazolidin-, Piperidin-, Piperazin- oder Morpholinrest, oder R₂, R₃ und R₄ zusammen mit dem N-Atom einen Pyrrol-, Pyridin-, Picolin-, Pyrazin-, Chinolin- oder Isochinolinrest bilden und Y Wasserstoff, Halogen, Methyl, Methoxy, oder Amino bedeutet.

18. Verbindung der Formel II gemäss Anspruch 17, dadurch gekennzeichnet, dass X^{⊕} eine Gruppe der Formel 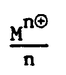 mit der in Anspruch 18 angegebenen Bedeutung ist.

19. Verbindung der Formel II gemäss Anspruch 17, dadurch gekennzeichnet, dass X^{⊕} eine Gruppe der Formel 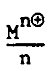 bedeutet, worin M^{n⊕} ein Alakli- oder Erdalkalikation und n die Zahlen 1 oder 2 bedeuten.

20. Verbindung der Formel II gemäss Anspruch 19, dadurch gekennzeichnet, dass M^{n⊕} ein Calciumkation bedeutet.

21. Verbindung der Formel II gemäss Anspruch 17, worin A′ eine Gruppe der Formel 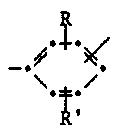 ist, worin R und R′ unabhängig voneinander Wasserstoff, Chlor, Methyl, Methoxy oder Ethoxy bedeuten.

22. Verbindung der Formel II gemäss Anspruch 17, worin A′ unsubstituiertes p-Phenylen bedeutet.

23. Verbindung der Formel II gemäss Anspruch 17, worin D eine Gruppe der Formel III 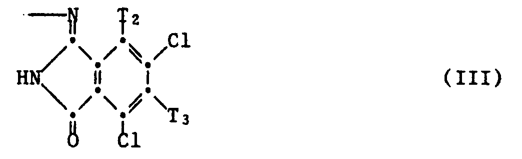 bedeutet.

24. Verbindung der Formel II gemäss Anspruch 17, worin E -O-bedeutet.

25. Verbindung der Formel II gemäss Anspruch 17, worin D eine Gruppe der Formel III, T₁ und T₂ Chlor und T₃ eine Gruppe -ET′ bedeuten.

26. Verbindung der Formel II gemäss Anspruch 17, worin T′ eine Gruppe der Formel 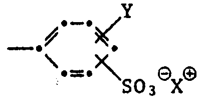 ist.

27. Verbindung der Formel II gemäss Anspruch 17, worin Y Wasserstoff bedeutet.

28. Verbindung der Formel

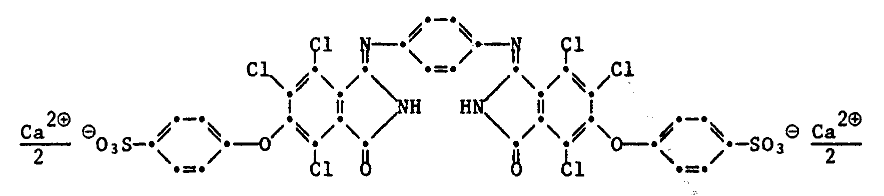

## Claims

1. A composition containing
a) an isoindolinone pigment of the formula I 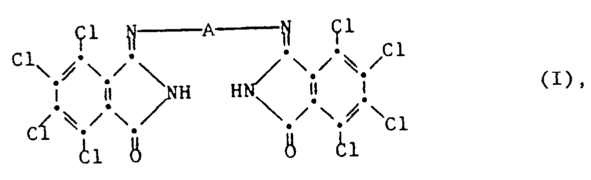 in which A is one of the groups of the formulae 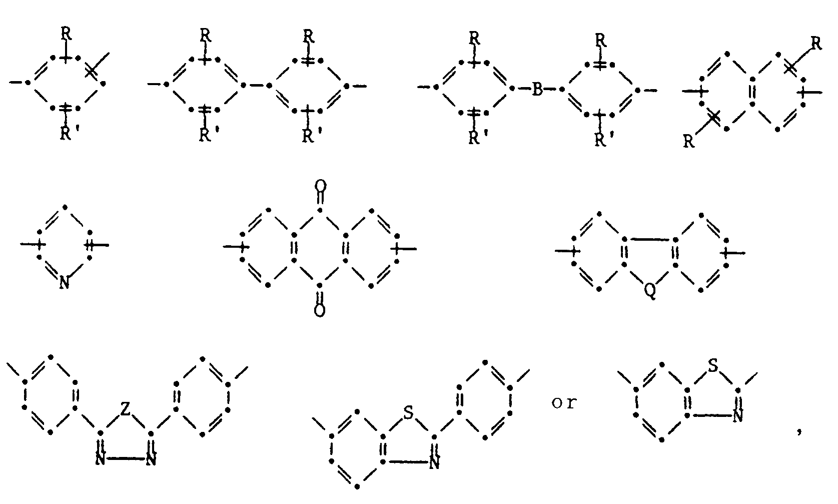 in which B is -O-, -S-, -SO₂-, -N=H-, -CH₂-, -CH=CH-, -O-CH₂-O, 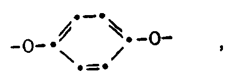 -CONH-, -NHCONH-, or -CONHNCO-, Q is -O- or -NH-and Z is -O- or -S- and R and R' are independently of one another hydrogen, halogen, C₁-C₄alkyl, C₁-C₄alkoxy or phenoxy, and
b) a compound of the formula II 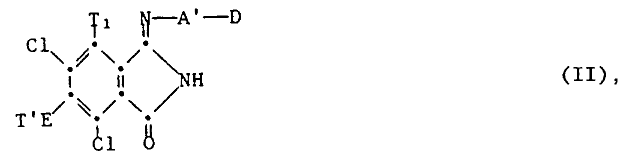 in which A' is as defined above for A, D is hydrogen, amino or a group of the formula III 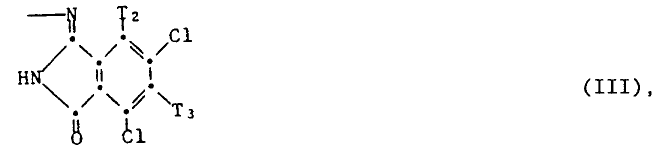 E is -O- or -S-, T₁, T₂ and T₃ independently of one another are chlorine or a group -ET', T' is one of the groups of the formulae 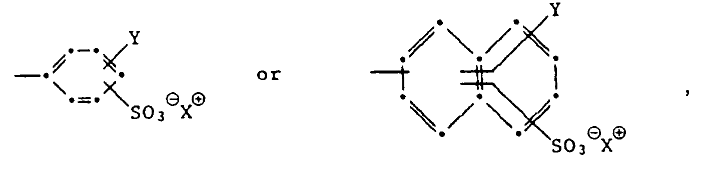 X^{⊕} is H^{⊕} or a group of the formulae 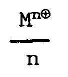 or N^{⊕}(R₁)(R₂)(R₃)(R₄), M^{n⊕} is an n-valent metal cation, n is 1, 2 or 3, R₁, R₂, R₃ and R₄ are independently of one another hydrogen, C₁-C₁₈alkyl, C₅-C₆cycloalkyl, phenyl unsubstituted or substituted by C₁-C₁₈alkyl, or R₃ and R₄ together with the N atom form a pyrrolidine, imidazolidine, piperidine, piperazine or morpholine radical, or R₂, R₃ and R₄ together with the N atom form a pyrrole, pyridine, picoline, pyrazine, quinoline or isoquinoline radical and Y is hydrogen, halogen, methyl, methoxy or amino.

2. A composition according to claim 1, containing as component a) a compound of the formula I, in which A is a group of the formula 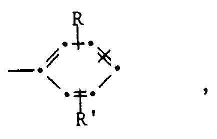 in which R and R' are independently of one another hydrogen, chlorine, methyl, methoxy or ethoxy.

3. A composition according to claim 1, containing as component a) a compound of the formula I, in which A is unsubstituted p-phenylene.

4. A composition according to claim 1, containing as component b) a compound of the formula II, in which X^{⊕} is a group of the formula 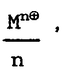 in which M^{n⊕} and n are as defined in claim 1.

5. A composition according to claim 1, containing as component b) a compound of the formula II, in which X^{⊕} is a group of the formula 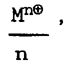 in which M^{n⊕} is an alkali metal or alkaline earth metal cation and n is 1 or 2.

6. A composition according to claim 5, wherein M^{n⊕} is a calcium cation.

7. A composition according to claim 1, containing as component b) a compound of the formula II, in which A' is a group of the formula 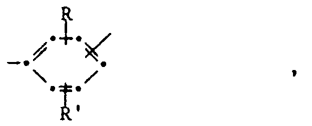 in which R and R' are independently of one another hydrogen, chlorine, methyl, methoxy or ethoxy.

8. A composition according to claim 1, containing as component b) a compound of the formula II, in which A' is unsubstituted p-phenylene.

9. A composition according to claim 1, containing as component b) a compound of the formula II, in which D is a group of the formula III

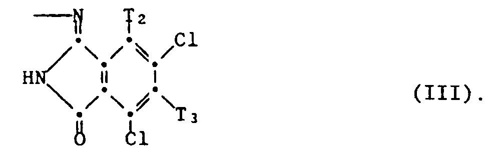

10. A composition according to claim 1, containing as component b) a compound of the formula II, in which E is -O-.

11. A composition according to claim 1, containing as component b) a compound of the formula II, in which D is a group of the formula III, T₁ and T₂ are chlorine and T₃ is a group -ET'.

12. A composition according to claim 1, containing as component b) a compound of the formula II, in which T' is a group of the formula

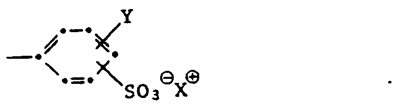

13. A composition according to claim 1, containing as component b) a compound of the formula II, in which Y is hydrogen.

14. A composition according to claim 1, containing
a) an isoindolinone pigment of the formula 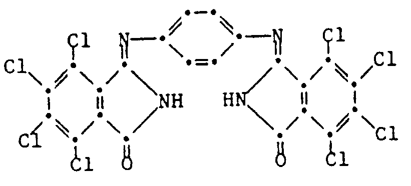 and
b) a compound of the formula

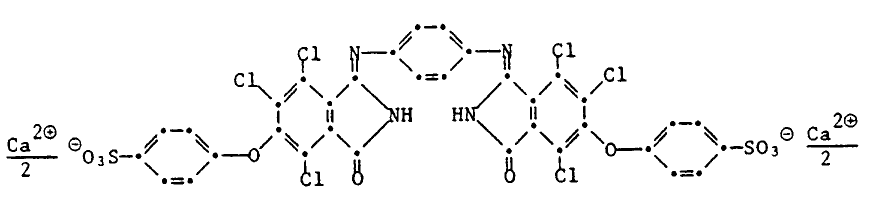

15. A composition according to claim 1, wherein the mixing ratio of component a) : component b) is 99 to 90 % by weight : 1 to 10 % by weight.

16. A high molecular weight organic material containing a composition according to claim 1.

17. A compound of the formula II 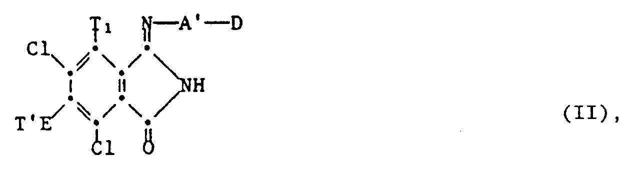 in which A' is one of the groups of the formulae 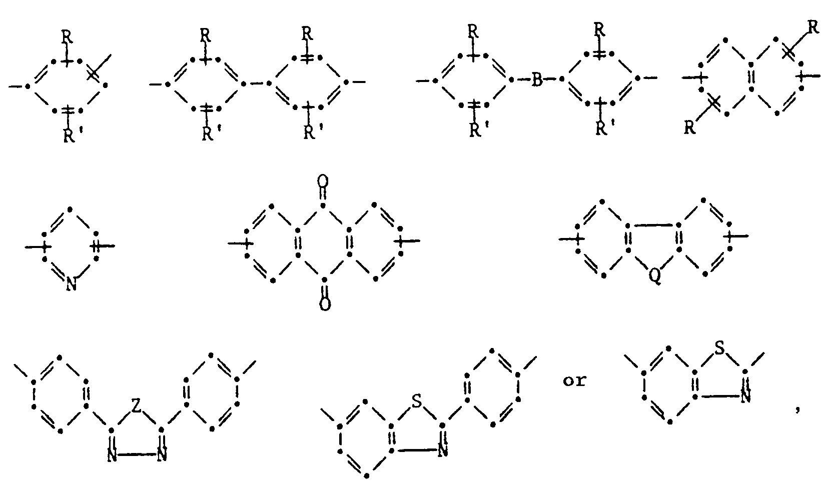 in which B is -O-, -S-, -SO₂-, -N-H-, -CH₂-, -CH=CH-, -O-CH₂-O-, 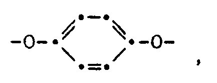 -CONH-, -NHCONH-, or -CONHNCO-, Q is -O- or -NH- and Z is -O- or -S- and R and R' are independently of one another hydrogen, halogen, C₁-C₄alkyl, C₁-C₄alkoxy or phenoxy, D is hydrogen, amino or a group of the formula III 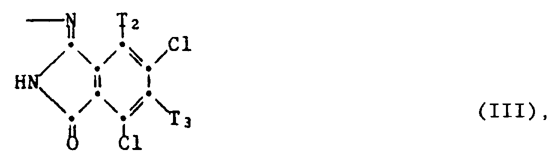 E is -O- or -S-, T₁, T₂ and T₃ independently of one another are chlorine or a group -ET', T' is one of the groups of the formulae 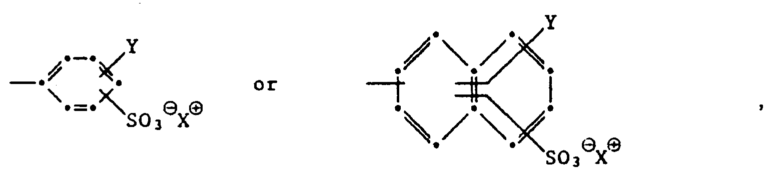 X^{⊕} is H^{⊕} or a group of the formulae 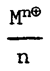 or N^{⊕}(R₁)(R₂)(R₃)(R₄), M^{n⊕} is an n-valent metal cation, n is 1, 2 or 3, R₁, R₂, R₃ and R₄ are independently of one another hydrogen, C₁-C₁₈alkyl, C₅-C₆cycloalkyl, phenyl unsubstituted or substituted by C₁-C₁₈alkyl, or R₃ and R₄ together with the N atom form a pyrrolidine, imidazolidine, piperidine, piperazine or morpholine radical, or R₂, R₃ and R₄ together with the N atom form a pyrrole, pyridine, picoline, pyrazine, quinoline or isoquinoline radical and Y is hydrogen, halogen, methyl, methoxy or amino.

18. A compound of the formula II according to claim 17, wherein X^{⊕} is a group of the formula 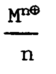 as defined in claim 18.

19. A compound of the formula II according to claim 17, wherein X^{⊕} is a group of the formula 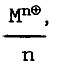 in which M^{n⊕} is an alkali metal or alkaline earth metal cation and n is 1 or 2.

20. A compound of the formula II according to claim 19, wherein M^{n⊕} is a calcium cation.

21. A compound of the formula II according to claim 17, in which A' is a group of the formula 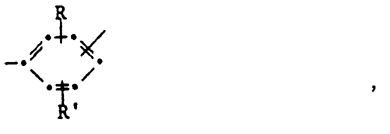 in which R and R' are independently of one another hydrogen, chlorine, methyl, methoxy or ethoxy.

22. A compound of the formula II according to claim 17, in which A' is unsubstituted p-phenylene.

23. A compound of the formula II according to claim 17, in which D is a group of the formula III

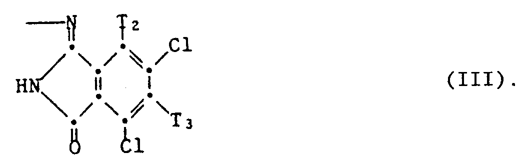

24. A compound of the formula II according to claim 17, in which E is -O-.

25. A compound of the formula II according to claim 17, in which D is a group of the formula III, T₁ and T₂ are chlorine and T₃ is a group -ET'.

26. A compound of the formula II according to claim 17, in which T' is a group of the formula

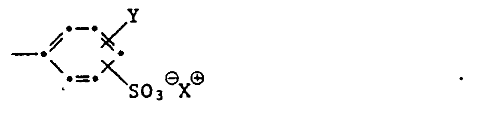

27. A compound of the formula II according to claim 17, in which Y is hydrogen.

28. The compound of the formula

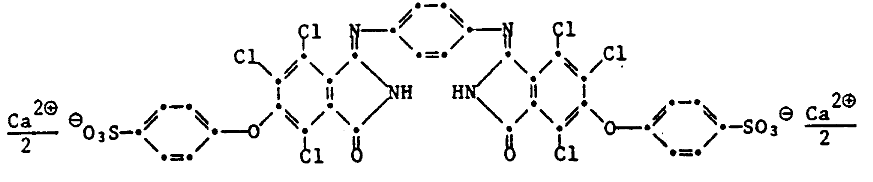

## Revendications

1. Composition qui comprend :
a) un pigment d'isoindolinone de formule I ci-dessous : 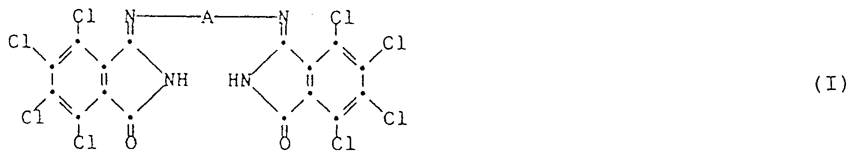 dans laquelle A est l'un des groupes suivants : 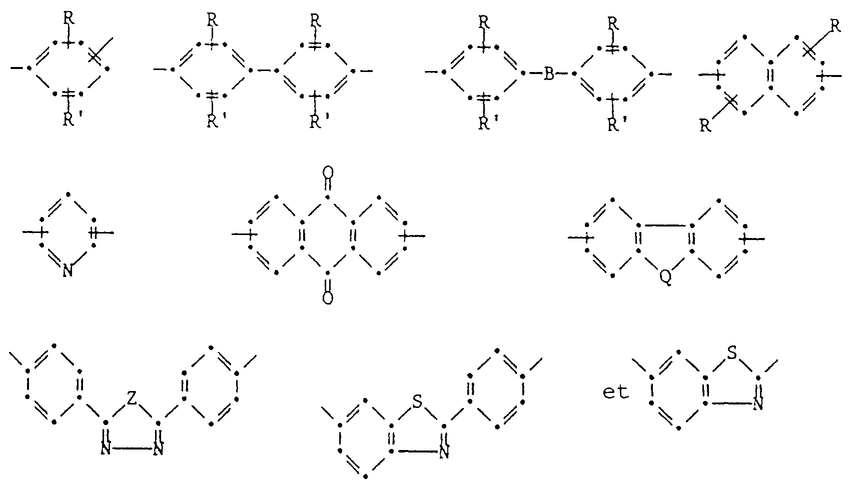 B représentant -O-, -S-, SO₂-, -N=N-, -CH₂-, -CH=CH-, -O-CH₂-O-, 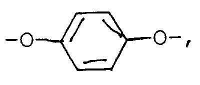 -CONH-, -NHCONH- ou -CONHNHCO-, Q représentant -O- ou -NH- et Z -O- ou -S-, et R et R', indépendamment l'un de l'autre, l'hydrogène, un halogène, un alkyle en C₁-C₄, un alcoxy en C₁-C₄ ou le groupe phénoxy, avec
b) un composé de formule II : 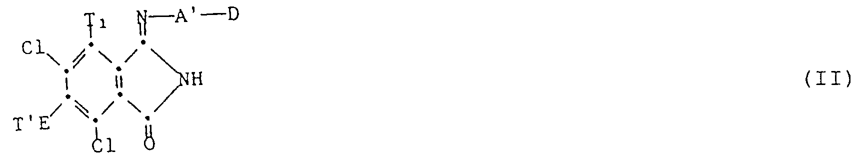 dans laquelle A' a les mêmes significations que A dans la formule I, D représente l'hydrogène, un groupe amino ou un groupe de formule III : 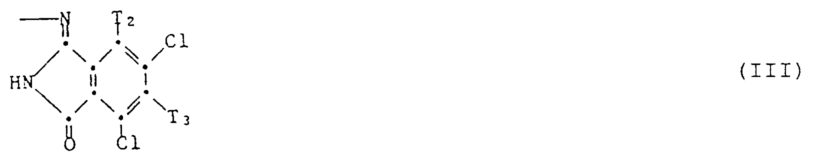 E représente -O- ou -S-, T₁, T₂ et T₃ étant chacun, indépendamment les uns des autres, le chlore ou un groupe -ET' et T' l'un des groupes suivants : 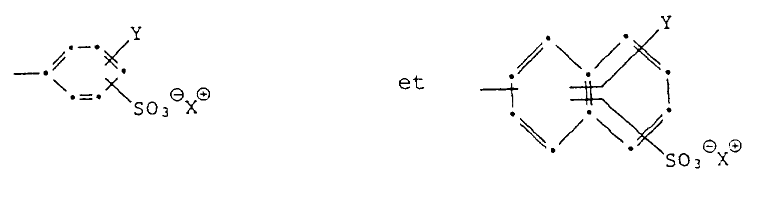 dans lesquels X^{⊕} est H^{⊕} ou bien un groupe 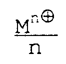 ou N^{⊕} (R₁) (R₂) (R₃) (R₄), Mn^{⊕} étant un cation de métal de valence n et n le nombre 1, 2 ou 3, et R₁, R₂, R₃ et R₄, indépendamment les uns des autres, l'hydrogène, un alkyle en C₁-C₁₈, un cycloalkyle en C₅-C₆, un phényle sans substituants ou avec un alkyle en C₁-C₁₈, ou bien R₃ et R₄ formant ensemble et avec l'atome d'azote un radical de pyrrolidine, imidazolidine, pipéridine, pipérazine ou morpholine, ou encore R₂, R₃ et R₄ formant ensemble avec l'atome d'azote un radical de pyrrole, pyridine, picoline, pyrazine, quinoléine ou isoquinoléine, et Y représente l'hydrogène, un halogène, le groupe méthyle ou méthoxy ou un groupe amino.

2. Composition selon la revendication 1, caractérisée en ce qu'elle comprend comme composant a) un composé de formule I dans lequel A est un groupe de formule : 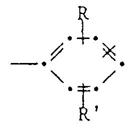 R et R' étant chacun, indépendamment l'un de l'autre, l'hydrogène, le chlore ou le groupe méthyle, méthoxy ou éthoxy.

3. Composition selon la revendication 1, caractérisée en ce qu'elle comprend comme composant a) un composé de formule I dans lequel A est un groupe p-phénylène sans substituants.

4. Composition selon la revendication 1, caractérisée en ce qu'elle comprend comme composant b) un composé de formule II dans lequel X^{⊕} est un groupe 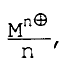 Mn^{⊕} et n étant tels que définis à la revendication 1.

5. Composition selon la revendication 1, caractérisée en ce qu'elle comprend comme composant b) un composé de formule II dans lequel X^{⊕} est un groupe 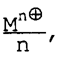 Mn^{⊕} étant un cation de métal alcalin ou alcalinoterreux et n le nombre 1 ou 2.

6. Composition selon la revendication 5, caractérisée en ce que Mn^{⊕} est un cation calcium.

7. Composition selon la revendication 1, caractérisée en ce qu'elle comprend comme composant b) un composé de formule II dans laquelle A' est un groupe de formule : 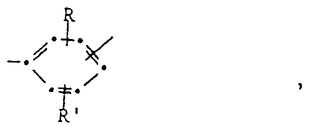 R et R' étant chacun, indépendamment l'un de l'autre, l'hydrogène, le chlore ou le groupe méthyle, méthoxy ou éthoxy.

8. Composition selon la revendication 1, caractérisée en ce qu'elle comprend comme composant b) un composé de formule II dans laquelle A' est un groupe p-phénylène sans substituants.

9. Composition selon la revendication 1, caractérisée en ce qu'elle comprend comme composant b) un composé de formule II dans lequel D est un groupe de formule III :

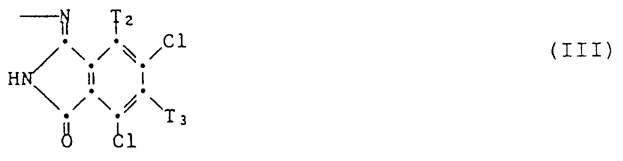

10. Composition selon la revendication 1, caractérisée en ce qu'elle comprend comme composant b) un composé de formule II dans lequel E est un atome d'oxygène.

11. Composition selon la revendication 1, caractérisée en ce qu'elle comprend comme composant b) un composé de formule II dans lequel D est un groupe de formule III, T₁ et T₂ sont le chlore et T₃ un groupe -ET'.

12. Composition selon la revendication 1, caractérisée en ce qu'elle comprend comme composant b) un composé de formule II dans lequel T' est un groupe de formule :

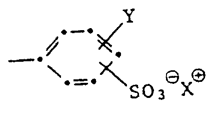

13. Composition selon la revendication 1, caractérisée en ce qu'elle comprend comme composant b) un composé de formule II dans lequel Y est l'hydrogène.

14. Composition selon la revendication 1, qui comprend :
a) un pigment d'isoindolinone de formule : 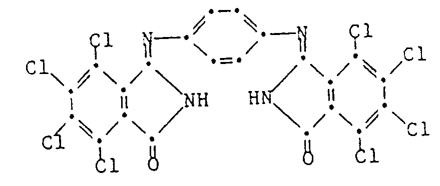 et
b) un composé de formule :

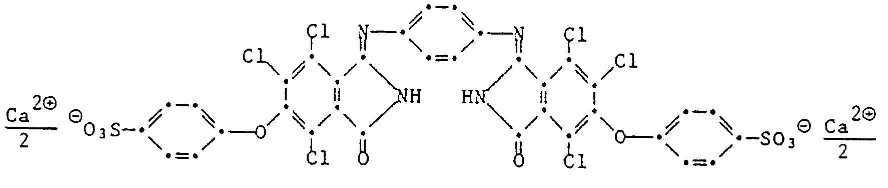

15. Composition selon la revendication 1, caractérisée en ce que les proportions des composants a) et b) sont respectivement de 99 à 90 % et de 1 à 10 %, en poids.

16. Matière organique macromoléculaire contenant une composition selon l'une quelconque des revendications précédentes.

17. Les composés de formule II ci-dessous : 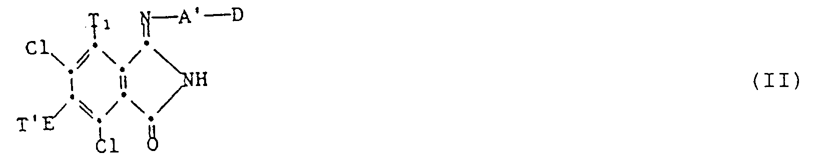 dans laquelle A' est l'un des groupes suivants : 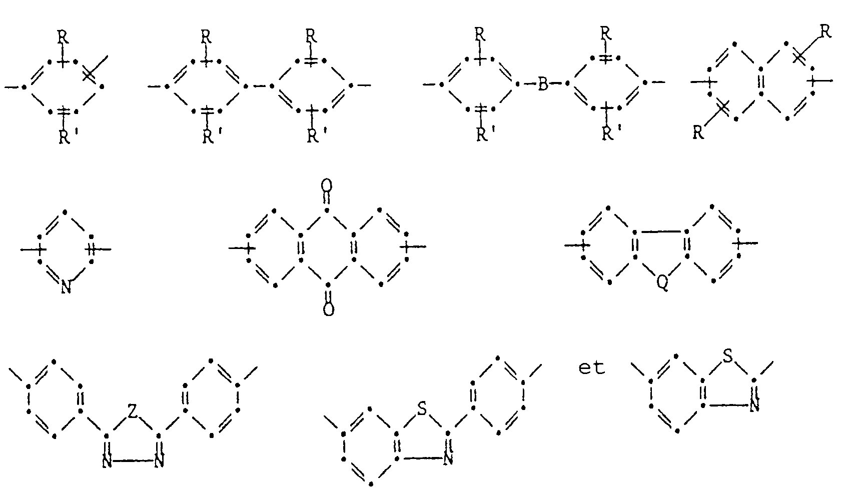 B représentant -O-, -S- ou un groupe -SO₂-, -N=N-, -CH₂-, -CH=CH-, -O-CH₂-O-, 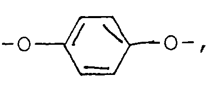 -CONH-, -NHCONH- ou -CONHNHCO-, Q représentant -O- ou -NH- et Z -O- ou -S-, et R et R', indépendamment l'un de l'autre, l'hydrogène, un halogène, un alkyle ou un alcoxy en C₁-C₄ ou le groupe phénoxy,
D est l'hydrogène, un groupe amino ou un groupe de formule III : 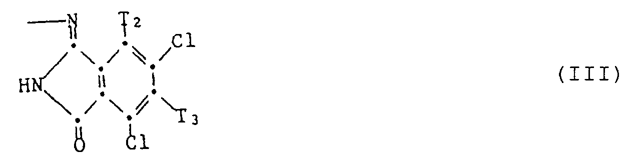 E un atome d'oxygène ou de soufre, T₁, T₂ et T₃ étant chacun, indépendamment les uns des autres, le chlore ou un groupe -ET', T' étant un groupe 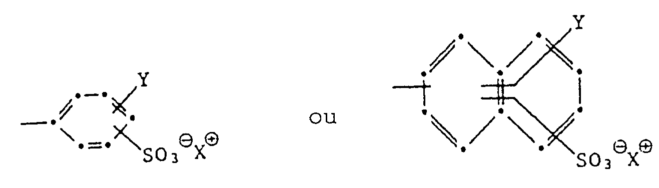 dans lequel X^{⊕} représente H^{⊕} ou un groupe 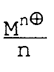 ou N^{⊕} (R₁)(R₂)(R₃)(R₄), M^{n⊕} étant un cation de métal de valence n, valence 1, 2 ou 3, et R₁, R₂, R₃ et R₄, indépendamment les uns des autres, étant chacun l'hydrogène, un alkyle en C₁-C₁₈, un cycloalkyle en C₅-C₆ ou un phényle sans substituants ou avec un alkyle en C₁-C₁₈, ou bien R₃ et R₄ formant ensemble et avec l' atome d'azote un radical de pyrrolidine, imidazolidine, pipéridine, pipérazine ou morpholine, ou encore R₂, R₃ et R₄ formant ensemble avec l'atome d'azote un radical de pyrrole, pyridine, picoline, pyrazine, quinoléine ou isoquinoléine, et Y étant l'hydrogène, un halogène ou groupe méthyle ou méthoxy ou amino.

18. Composés de formule II selon la revendication 17, caractérisés en ce que X^{⊕} est un groupe de formule 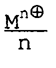 telle que définie à la revendication 17.

19. Composés de formule II selon la revendication 17, caractérisés en ce que X^{⊕} est un groupe de formule 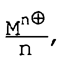 M^{n⊕} étant un cation de métal alcalin ou alcalinoterreux et n le nombre 1 ou 2.

20. Composés de formule II selon la revendication 19, caractérisés en ce que M^{n⊕} est un cation calcium.

21. Composés de formule II selon la revendication 17 dans lesquels A' est un groupe de formule : 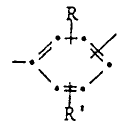 R et R' représentant chacun, indépendamment l'un de l'autre, l'hydrogène, le chlore ou le groupe méthyle, méthoxy ou éthoxy.

22. Composés de formule II selon la revendication 17 dans lesquels A' est un groupe p-phénylène sans substituants.

23. Composés de formule II selon la revendication 17 dans lesquels D est un groupe de formule III :

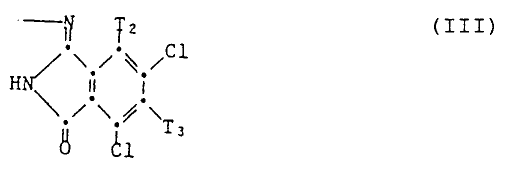

24. Composés de formule II selon la revendication 17 dans lesquels E représente un atome d'oxygène.

25. Composés de formule II selon la revendication 17 dans lesquels D est un groupe de formule III, T₁ et T₂ sont le chlore et T₃ un groupe -ET'.

26. Composés de formule II selon la revendication 17 dans lesquels T' est un groupe de formule :

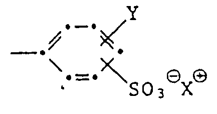

27. Composés de formule II selon la revendication 17 dans lesquels Y est l'hydrogène.

28. Le composé de formule :
